# EUROPEAN PATENT APPLICATION

(11) **EP 1 164 410 A1**
(43) Date of publication of application: **19.12.2001**
(21) Application number: 01114077.9
(22) Date of filing: 09.06.2001
(51) Int. Cl.: G02C 1/02, G02C 9/00

(54) **Eyeglasses of the type which are free of mounting and having supplementary structures**

(30) Priority: 16.06.2000 IT VI000132; 15.09.2000 IT VI000203
(71) Applicant: Vignato, Arcadio, 36061 Bassano del Grappa (Vicenza) (IT)
(72) Inventor: Vignato, Arcadio, 36061 Bassano del Grappa (Vicenza) (IT)
(74) Representative: Bettello, Pietro, Dott. Ing.

(57) **Abstract**

The eyeglass is of the type without mounting characterized by the fact that the hooking of the side rods and the central bridge to the lenses is carried out by providing the extremities of the riser and the central bridge with a terminal portion which is braided. This terminal portion is inserted within corresponding niches formed on the internal wall of the lens.

## Description

### Field of The Invention

The present invention relates to the production of eyeglasses of the type which have no mounting and no supplementary structure.

### Background of The Prior Art

The eyeglasses called "extralight" have been known for a long time. In these eyeglasses the lenses are deprived of mounting and are directly connected to the central small bridge and to the extremity of the two lateral rods.

This new type of glasses lens therefore imposed on the manufacturers in this field the task of revising the devices capable of supporting the lenses, specifically with respect to the system of hooking the riser to the lens. In the present state of the art, the most common constructive solution consists of anchoring the lens with the extremity of the riser, that is with the terminal part of the rod comprised between the hinge and the lens itself.

The blocking of the lens without any mounting in the proper position with respect to the rods and the small central bridge is obtained by providing the extremities of connection of the rod and the small bridge to be particularly shaped, for instance with a shape as a fork, which becomes inserted on some openings formed in the same lens. In order to make sure that the processing is more rigid and to avoid that, with use, the lenses lose their optimal inclination with respect to the face of the individual who is using the glasses, occasionally there has been provided that the extremities of the riser and the small bridge be slightly imbedded in the lenses, as it has been described by way of example in the documents WO-A-96/33438 and U.S.-A-5,847,800.

The use of additional lenses, commonly called, supplementary has also been known. These supplementary lenses are positioned in front of the normal lenses, with different objects, from simple parasol lenses to enlargement lenses, used for instance in microsurgery for views at a short distance and progressive lenses.

Among the many methods for anchoring the supplementary lenses the so called magnetic attack is used. This method is constituted by magnetic small plates mounted on the frame of the eyeglasses, the plates attracting other magnetic plates present in the supplementary structures as described for instance in the document WO-A-96/37800.

At the present state of the art the magnetic hooking is carried out between the two planar surfaces of two counterposed magnets which fit together, so that the optimum reciprocal attraction force is only the force directed horizontally, that is when the two magnets in addition to fitting together become parallel with respect to each other.

This method of hooking has in addition two drawbacks. The first drawback is due to the fact that it is not always possible to carry out the application of the supplemental material on the principal mounting with the necessary exactness. The second drawback is due to the fact that a single accidental bump of the eyeglasses is sufficient to cause the supplementary material to be moved away from its regular position, while remaining magnetically hooked with the result that the vision of the user becomes imperfect.

These drawbacks have been overcome only partially by means of supplementary lenses on a frame which is sufficiently rigid, the frame being provided with lateral projections which have mechanical or magnetic hooks, the hooks being anchored on the rods or on the riser of the principal mounting, preferably corresponding to the hinge. By way of example of this type of production, there may be mentioned British A-2338566, EP-A-0773463, EP-A-0743545, WO-A-97/16761 and U.S.-A-5877838.

### Summary of The Invention

One object of the present invention is to provide a hooking system of the riser and the small bridge to the lenses to be mounted on eyeglasses of the type free of mounting which offers advantages over the similar known products.

Specifically the hooking system of the riser of the invention is characterized by simplicity of execution, minimum cluttering and pleasant aesthetic appearance.

Another object of the invention is to provide a system of hooking the riser and the central small bridge to the lenses free of mounting which is sufficiently strong and easily cleanable.

Still another object of the invention is to provide a system of hooking the riser and the small bridge to the lenses free of mounting which does not depend on the thickness and the shape of the lenses.

Another object of the invention is to provide a system for hooking the riser to the lens which permits the application to the eyeglass in a rapid and sure manner.

A further object of the invention is to provide supplemental lenses, free of mounting and having magnetic small plates, characterized by the fact that they allow the user to position them extremely exactly and rapidly on the principal eyeglass.

Still another object is to provide magnetic small plates which may be mounted on the supplemental lenses of minimum thickness.

A further object of the invention is to provide small magnetic plates which require an anchoring system on the body of the supplemental lens which is simple, of rapid execution, minimum cluttering and also valid aesthetically.

The inherent objects to the system of hooking the riser and the small bridge to the lenses are achieved by providing that the extremities of the riser and the central small bridge have a terminal position which is inserted from the internal part of the lens within corresponding niches shaped as a diamond, the niches being made on the internal wall of the lens and having an opening on the bottom wall. In addition the invention provides that the terminal portion have a braid, male or female, which has a protruding head, which through the above opening protrudes from the opposite part of the lens.

A first embodiment of the braid is constituted by a decorated opening, formed in the terminal portion mentioned hereinabove, which is engaged in the niche formed on the lens and on the braid is screwed through the opening formed on the lens a threaded pin, provided with a head, which is inserted from the external part of the lens.

According to a second embodiment, the braid is constituted by an element protruding beyond the terminal portion and which engages in the niche formed in the lens and through the opening formed on the lens allows the screwing of one head from the external part of the lens.

In both embodiments the niche formed on the internal wall of the lens and shaped as a diamond, is disposed in a manner that its longitudinal axis is perpendicular to the axis of the opening formed in the lens, which is necessary to allow the passage of the threaded element.

Constructively the invention provides that the riser is shaped in a manner to present two filiform elements and a small block between the two filiform elements, all of them being disposed reciprocally superimposed with the two filiform elements projecting to the rear from the lens up to the hinge while the intermediate small block which is of limited length and a little greater than the depth of the niche, constitutes the threaded body, by means of a threaded opening or a threaded protruding pin.

With this construction the blocking and the support of the lenses are assured as in the similar embodiments but there is also the advantage that on the external surface of each of the two lenses only two heads protrude, that is those heads being necessary for the threaded connection of the riser and the small bridge and allowing the possibility of applying to the eyeglass in a rapid and simple manner, supplemental lenses such as filters or parasol lenses. In fact the objects inherent the supplemental lenses are obtained due to the fact that supplemental lenses are provided, the lenses having on their internal surface magnetic blocks which are disposed in such a manner that when the supplemental lenses are positioned above the lenses of the eyeglass, the magnetic blocks are anchored, due to a magnetic effect over the heads so that they constitute the support of the supplemental lenses. Specifically, the exact positioning of the supplemental lenses over the main lens is obtained by providing the magnetic plate to have a seat in a cavity within which is a corresponding protrusion is present when the supplemental lens is placed almost in contact with the main lens.

These and other characteristics of the invention are better understood by the description of a few possible embodiments provided as illustration and non-limiting examples, by reference to the drawings, of which:
- Fig. 1: is a perspective exploded view of a pair of glasses without mounting according to the invention;
- Figs. 2, 3 and 4: are exploded elevational and side views respectively of the system of hooking the riser to the lens.
- Figs. 5, 6 and 7: are exploded elevational and side views of a second embodiment of the system of hooking the riser to the lens.
- Figs. 8 and 8A: show in detail the area of hooking the supplemental material to the eyeglass, respectively, exploded, and all together;
- Figs. 9 and 10: show in detail two different shapes of the small magnetic plate present in the supplemental material.

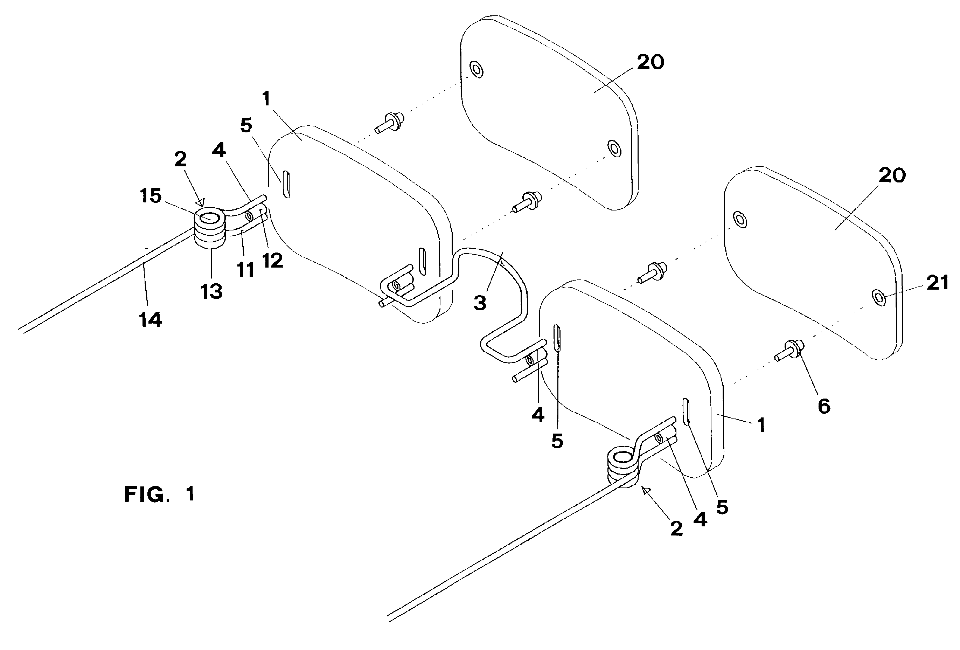

As shown in Fig. 1, in the type of glasses called "extralight" and without mounting the lenses (1) are supported only by the lateral risers (2) and by the central bridge (3). According to the present invention the hooking of the side risers (2) and the bridge (3) is achieved by providing that the extremities of the risers and the central bridge have a terminal portion (4) which is inserted from the interior part of the lens within niches (5) formed in the internal wall of the lens (1), the niches being provided on the bottom wall with an opening (8) formed on the lens itself. This terminal portion has a braid, male or female, which is engaged with head (6), the latter protruding on the external part of lens (1).

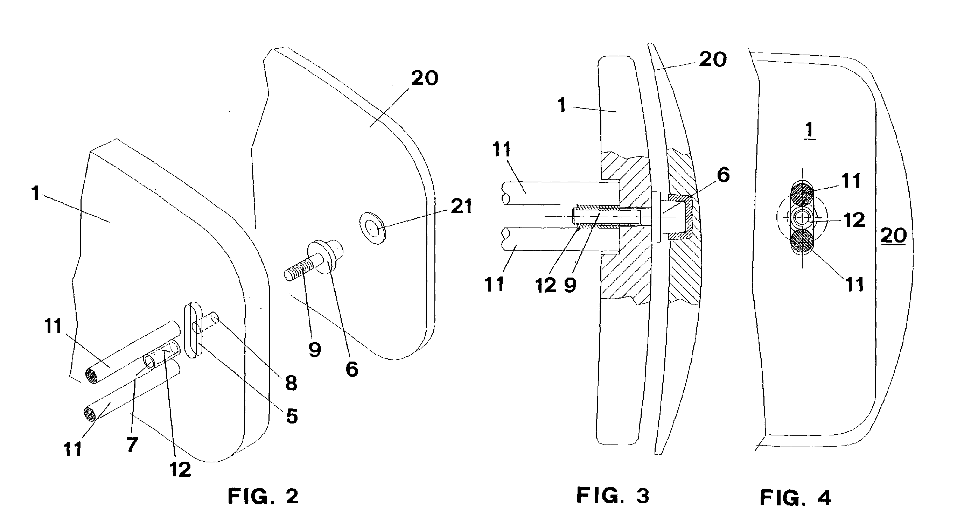

As shown in Figs. 2-4, a first embodiment of the braid is constituted by threaded opening 7, formed in portion (4) which engages with niche (5). The opening is screwed by means of opening (8) formed on the lens, with threaded pin (9). Head (6) is provided with the pin (9). The pin (9) is inserted from the external part of the lens.

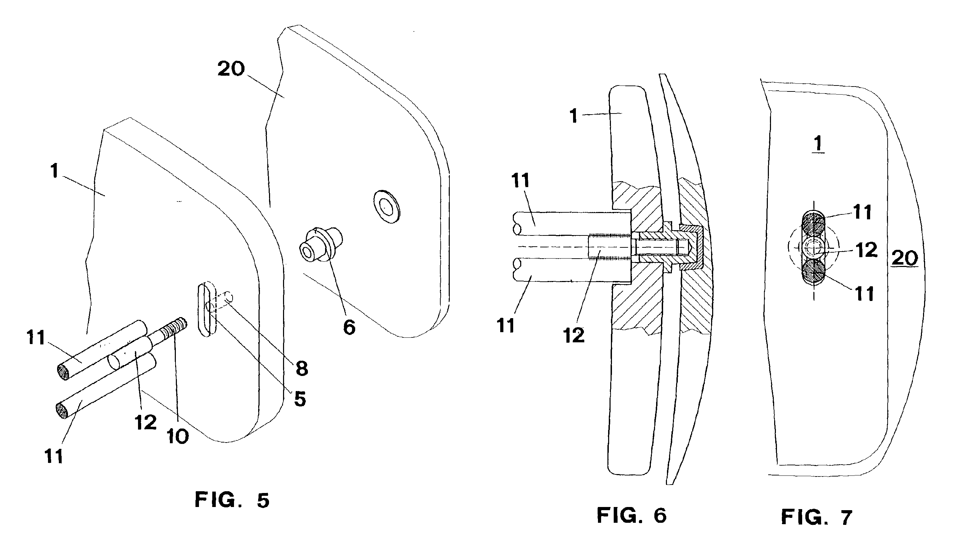

As shown in Figs. 5-7, a second embodiment of the braid is constituted by a threaded element (10) which protrudes from the terminal portion (4) of the riser and which by means of opening (8) formed in the lens (1), allows the screwing of head (6) from the exterior of the lens itself.

As shown in the Figures, the riser (2) is formed by two filiform elements (11) which extend to the rear of the lens (1) up to hinge (13) while the central block (12) of limited length, a little superior to the depth of niche (5) constitutes the threaded body of female type, that is it is provided with threaded opening (7) and male type, that is it is provided with threaded pin (9).

A first advantage obtained with the constructive solutions of the invention resides in the possibility for the manufacturer of eyeglasses of producing a single type of riser (2), in which the threaded portion constituted by threaded pin (9) or the threaded element (10), is sufficiently long so that it may be cut for the proper measure by the optician in function of the thickness of lenses (1).

A further advantage obtained with the constructive solution of the invention is the possibility of utilizing supplemental lenses (20) which do not require a supporting frame but are blocked on the corresponding lenses (1) by the anchoring action being exerted by the two magnetic blocks (21) (being applied on the internal surface of the supplemental lens) on heads (6) which protrude from the external part of the lens itself.

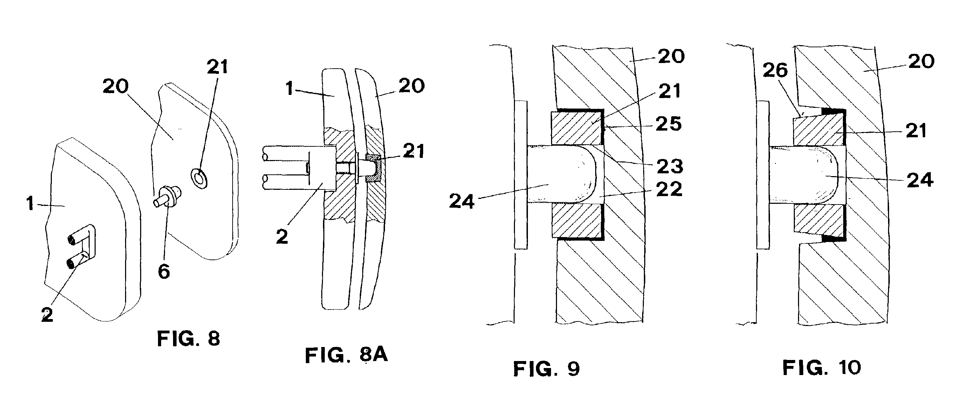

As shown in Figs. 8 to 10, a further novel characteristic of the invention resides in the fact that the magnetic plate (21) is inserted within niche (22) formed on the supplemental lens (20) and this magnetic plate is provided with a seat having cavity (23), within which the corresponding portion (24) is inserted. The protruding portion (24) is present on the main lens when the supplemental lens is placed substantially in contact with the main lens.

The magnetic plate (21) contained in the interior of niche (22), has a cylindrical hollow shape, preferably with a central opening and the anchoring of the magnetic plate to the supplemental lens (20) is achieved by the use of a film of glue (25).

Advantageously the magnetic plate (21) has the external surface (26) of diverging trunco-conical shape, so that the film of glue (25) is allowed to dispose with a greater mass along the external border and therefore to ensure greater anchoring of the plate within niche (22).

A possible variation of the invention provides the magnetic plate (21) to be provided with a protrusion which is inserted in the interior of a corresponding seat with a cavity formed on the mounting eyeglass.

Obviously forms of achievement different from the illustrated embodiments are possible, without departing from the subject matter of the claims.

## Claims

1. An eyeglass with lenses of the type free of mounting, called "extralight" in which the lenses (1) are connected directly to the central bridge and to the extremity of the two lateral rods by means of a threaded attack, said eyeglass being **characterized by** the fact that the extremities of the riser (2) and the extremities of the central bridge (3) have a terminal portion (4) which is inserted from the internal part of the lens within corresponding niches (5) formed on the internal wall of the lenses.

2. The eyeglass according to claim 1 with lenses of the type free of mounting, **characterized by** the fact that each niche (5) formed on the internal wall of lens (1) is shaped as a diamond and has on its bottom wall an opening (8) which goes through the entire thickness of the lens itself.

3. The eyeglass with lenses of the type free of mounting according to claims 1 and 2 **characterized by** the fact that the terminal portion (4) of the riser and the bridge have a threaded attack which becomes engaged with head (6), said head protruding on the external part of lens (1).

4. The eyeglass with lenses of the type free of mounting according to claim 3 **characterized by** the fact that the threaded attack is constituted by a threaded opening (7) formed in the terminal portion (4) of the riser and the bridge, said threaded opening engaging itself in niche (5) present in the lens, a threaded pin (9) which has head (6), being screwed on said opening (7) by means of opening (8) present in said lens, said pin (9) being inserted from the external part of said lens.

5. The eyeglass according to claim 3 **characterized by** the fact that the threaded attack is constituted by a threaded element (10) which protrudes from portion (4), said threaded attack engaging into niche (5), said niche being formed in lens (1) and by means of opening (8) formed in said lens, allows the head (6) to be screwed from the external part of said lens.

6. The eyeglass according to one or more of the preceding claims **characterized by** the fact that the longitudinal axis of said niche (5) and the corresponding opening (8) are perpendicular with respect to each other.

7. The eyeglass according to one or more of the preceding claims **characterized by** the fact that the terminal part of the riser and the bridge are shaped in a manner to offer two filiform elements (11) and a block (12) which is intermediate between said filiform elements, said block and said filiform elements being superimposed one over the other, said filiform elements protruding to the rear from lens (1) up to hinge (13) while the intermediate block (12) of limited length which is a little superior to the depth of niche (5) constitutes the threaded attack to said lens.

8. The eyeglass according to claim 7 **characterized by** the fact that the intermediate block (12) is provided with threaded opening (7).

9. The eyeglass according to claim 7 **characterized by** the fact that said intermediate block (12) has a protruding threaded element (10).

10. The eyeglass according to one or more of the preceding claims **characterized by** the fact that on the external surface of each of the two lenses (1) protrude only the heads (6) of the threaded connection of the riser (12) and the bridge (3).

11. The eyeglass according to one or more of the preceding claims **characterized by** the fact that it allows the mounting of supplemental lenses which are provided on their internal surface with two magnetic blocks (21), said blocks being disposed in such a manner that when said supplemental lenses are positioned above the lenses, said magnetic blocks become anchored due to a magnetic action on protruding heads (6) thereby constituting the support of the supplemental lenses.

12. Additional material for eyeglasses as described in one or more of the preceding claims **characterized by** the fact that it is mounted individually on the eyeglass and is free of a supporting frame.

13. Additional material according to claim 12 **characterized by** the fact that the magnetic hook is of the embedded type.

14. Additional material for eyeglasses according to claim 13 **characterized by** the fact that the magnetic plate is provided with a seat with a cavity and a corresponding metallic and/or ferromagnetic protrusion present on the main lens is inserted in said seat when said supplemental lens is placed substantially in contact with said main lens (15).

15. Additional material according to claim 13 **characterized by** the fact that the magnetic plate is provided with a protrusion which is inserted in a corresponding seat having a cavity, said protrusion being metallic and/or ferromagnetic, said protrusion being present on the main lens when said supplemental lens is placed substantially in contact with said main lens.

16. Additional material for eyeglasses according to one or more of the preceding claims **characterized by** the fact that the hook between the supplemental lens (20) and the main lens (2) is carried out by means of a connection providing that the supplemental lens be provided on its internal wall with two magnetic plates (21), said magnetic plates being located in a manner that when the supplemental lens is placed on the main lens said plates come in contact with the protruding portion (24) of the threaded bodies.

17. Additional material for eyeglasses according to one or more of the preceding claims **characterized by** the fact that each magnetic plate (21) is inserted also partially within a niche (22) formed on the lens (21).

18. Additional material according to one or more of the preceding claims **characterized by** the fact that the magnetic plate (21) has a hollow cylindrical shape.

19. Additional material according to one or more of the preceding claims **characterized by** the fact that the magnetic plate (21) has the external side surface (26) with a slightly diverging tronco-conical cross section.

20. Additional material according to one or more of the preceding claims **characterized by** the fact that the magnetic plate (21) has a seat with cavity (23) of cylindrical shape going through the entire thickness of the plate.

21. Additional material according to one or more of the preceding claims **characterized by** the fact that the anchoring of the magnetic plate (21) to the supplemental lens (20) is carried out by means of a film of glue (25).
